(19) Europäisches Patentamt / European Patent Office / Office européen des brevets

(11) **EP 2 356 403 B1**

(12) **EUROPEAN PATENT SPECIFICATION**

(45) Date of publication and mention
of the grant of the patent:
**01.03.2017 Bulletin 2017/09**

(51) Int Cl.:
*G01C 17/30* (2006.01)     *G01S 19/26* (2010.01)
*G01S 19/25* (2010.01)

(21) Application number: **09745249.4**

(22) Date of filing: **30.10.2009**

(86) International application number:
**PCT/US2009/062701**

(87) International publication number:
**WO 2010/051416 (06.05.2010 Gazette 2010/18)**

(54) **USING MAGNETOMETER WITH A POSITIONING SYSTEM**

VERWENDUNG EINES MAGNETOMETERS MIT EINEM POSITIONSBESTIMMUNGSSYSTEM

UTILISATION D'UN MAGNÉTOMÈTRE AVEC UN SYSTÈME DE POSITIONNEMENT

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **31.10.2008 US 110078 P
15.09.2009 US 560207**

(43) Date of publication of application:
**17.08.2011 Bulletin 2011/33**

(73) Proprietor: **Qualcomm Incorporated
San Diego, CA 92121 (US)**

(72) Inventors:
• **GUM, Arnold, J.
San Diego
California 92121 (US)**
• **GARIN, Lionel, J.
San Diego
California 92121 (US)**

(74) Representative: **Schmidbauer, Andreas Konrad
Wagner & Geyer Partnerschaft
Patent- und Rechtsanwälte
Gewürzmühlstrasse 5
80538 München (DE)**

(56) References cited:
**WO-A1-2006/044931      US-A- 5 598 381
US-A1- 2003 004 639     US-A1- 2004 203 915
US-A1- 2007 210 927     US-A1- 2008 048 910**

## Description

BACKGROUND

A common means to determine the location of a device is to use a satellite position system (SPS), such as the well-known Global Positioning Satellite (GPS) system or Global Navigation Satellite System (GNSS), which employ a number of satellites that are in orbit around the Earth. Position measurements using SPS are based on measurements of propagation delay times of SPS signals broadcast from a number of orbiting satellites to an SPS receiver. Once the SPS receiver has measured the signal propagation delays for each satellite, the range to each satellite can be determined and precise navigation information including 3-dimensional position, velocity and time of day of the SPS receiver can then be determined using the measured ranges and the known locations of the satellites.

Before the SPS receiver can receive an SPS signal, however, the SPS receiver must locate the satellite relative to the receiver. Typically, the SPS receiver must locate at least four orbiting satellites before a position fix may be performed. The location of the satellites within the SPS system can be identified by a number of different pieces of information. For example, the almanac and ephemeris provide information regarding the location of all of the satellites in the "constellation", where the ephemeris information is more accurate than the almanac information. The almanac and the ephemeris information, however, is valid for only a limited amount of time, the ephemeris information being valid for a much shorter time than the almanac information.

When a SPS receiver has already acquired the satellite signals and has determined a fix of the position of the SPS receiver, the subsequent determination of position is fast. However, when the SPS receiver is powered on, or brought out of a sleep mode, a first position fix must be performed, which includes locating the satellites. The Time to First Fix (TTFF) is the time it takes to perform this first position fix. Several factors affect how long it will take to locate the satellites, and thus, the TTFF. Factors include the length of time from the last position fix and, thus, whether the SPS receiver has valid almanac and ephemeris data and whether there is a significant change in the location of the SPS receiver since the last position fix. An SPS receiver will typically have almanac information; however, the ephemeris may be expired upon start up. Thus, satellites will need to be detected and their signals demodulated to get new ephemeris so that a position fix may be performed. Typically, an SPS receiver will use the last prior fix as a seed position for searching for visible satellites. Where there is little change in location, using the last position fix as a seed position provides a fast TTFF. If, however, there has been a large change in position, e.g., after an intercontinental flight, relying on the last position fix will result in a failed satellite search. As a result, the SPS receiver may go into a recovery mode before it can lock onto the first satellite at the expense of significantly increased TTFF.

Attention is drawn to US 2004/203915 A1 which describes a method and apparatus that uses a position cache for locating a position of an A-GPS receiver that is embedded in a mobile device. The position cache is a look up table comprising cell identification codes and position information. The position information is generally the location of the center of each cell that is identified by a cell identification code in the table. This position information is used as a position estimate for the A-GPS receiver. The method receives a cell identification code from a wireless network, retrieves a position estimate from the a position cache that corresponds to the received cell identification code, then computes a current position of the A-GPS receiver using position location aiding information, certain satellite data and the position estimate of the A-GPS receiver.

Attention is drawn to US 2003/0004639 A1, which discusses a receiver of a satellite positioning system which comprises the following: reception means for receiving signals transmitted by satellites, means for measuring the magnetic field of the earth at the location of said receiver in order to obtain a measurement result describing properties of said magnetic field and for obtaining an estimated latitude based on the measurement result, a clock for keeping track of the local time at the location of the receiver, and means for comparing the local time indicated by said clock and the satellite time in order to identify a time zone where said receiver is located and for obtaining an estimated longitude based on said identified time zone, said receiver being responsive to said estimated latitude, estimated longitude and information indicating orbits of the satellites for identifying a group of available satellites; for performing a search for signals transmitted by satellites which belong to said group of satellites, and for calculating the positional coordinates of the receiver based on signals received from satellites which belong to said group of satellites.

Attention is drawn to WO 2006/044931 A1 describing a mobile station database of cellular identifications and associated position information stored in mobile station memory. The mobile station uses the position information in the database to assist in determining a current position for the mobile based on an identifier, such as cell ID, base station BSIC, PSC, or carrier frequency. A satellite vehicle signal is searched in an uncertainty region that is a function of position information associated with the current identifier.

## SUMMARY

In accordance with the present invention a method, as set forth in claim 1, and a mobile station, as set forth in claim 12, respectively, are provided. Preferred embodiments of the invention are described in the dependent claims.

A mobile station determines an approximate latitude using a feature of the Earth's magnetic field as measured by the mobile station. The feature of the Earth's magnetic field may be, e.g., inclination or vertical intensity, and may be determined using data from a three-dimensional magnetometer and a local vertical sensor, such as a three-dimensional accelerometer. An instantaneous value of the magnetic field feature determined using a magnetometer and accelerometer may be filtered over time to reduce the affects of user motion and the presences of large metallic masses. An approximate longitude may also be determined, e.g., based on the time difference between a local time zone and a reference time zone with a known longitude, or using an external signal such as the local country code. The mobile station uses the approximate latitude and approximate longitude, if determined, to assist in determining a position fix for the mobile station. For example, the mobile station may use the approximate latitude and approximate longitude to determine a list of visible satellites in a satellite positioning system (SPS) during a search and acquisition of satellite signals for a position fix. The mobile station may also use the approximate latitude and approximate longitude as a seed position in the position computation.

BRIEF DESCRIPTION OF THE DRAWING

Fig. 1 illustrates a mobile station that receives signals from SPS satellites and is capable of determining a coarse position fix using the Earth's magnetic field.

Fig. 2 illustrates features of the Earth's magnetic field with respect to Earth's coordinate system.

Fig. 3 illustrates the inclination angle of Earth's magnetic field.

Fig. 4 illustrates the vertical component of Earth's magnetic field.

Fig. 5 illustrates the declination angle of Earth's magnetic field.

Fig. 6 illustrates the horizontal component of Earth's magnetic field.

Fig. 7 illustrates the total intensity component of Earth's magnetic field.

Fig. 8 illustrates a block diagram of a mobile station capable of determining a coarse position using the Earth's magnetic field.

Fig. 9 illustrates a flow chart showing a method of determining a coarse position fix using the Earth's magnetic field.

Fig. 10 illustrates the three-dimensional coordinate system of a magnetometer with respect to the three-dimensional coordinate system of an accelerometer.

Fig. 11 shows a block diagram illustrating the determination of a value of a feature of the Earth's magnetic field using a magnetometer and accelerometer and using that value to determine an approximate latitude of the mobile station.

Fig. 12 shows a block diagram illustrating the determination of longitude using the local time and the time at a location with a known position.

DETAILED DESCRIPTION

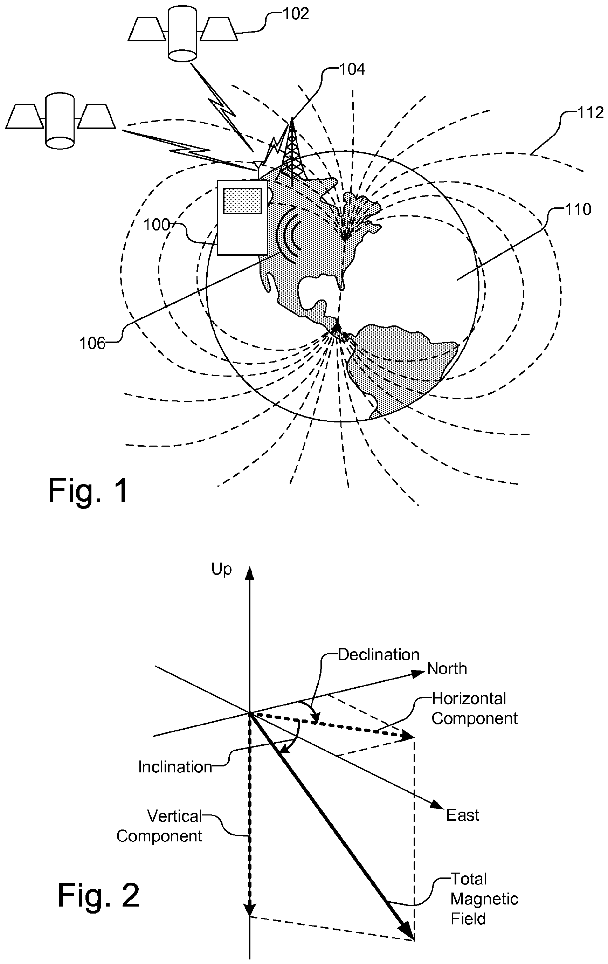

Fig. 1 illustrates a mobile station 100 that is capable of performing a coarse position fix using the magnetic field 112 of the Earth 110. The mobile station 100 may also use the local time, e.g., as received from a cellular towers 104 or wireless communication access points 106, or the like, to assist in performing the coarse position fix. A course position fix may be used to assist in the search for satellites 102 in a satellite positioning system that are visible to the mobile station during search and acquisition of satellite signals for a position fix. For example, the coarse position may be used to determine if the last position fix may be used as the seed position for the search for satellites and, if not, the coarse position may be used as the seed position. Using a coarse position determined using the Earth's magnetic field 112 along with the Almanac information permits the mobile station to detect satellites in significantly less time than if a worldwide search is performed.

A satellite positioning system (SPS) typically includes a system of transmitters positioned to enable entities to determine their location on or above the Earth based, at least in part, on signals received from the transmitters. Such a transmitter typically transmits a signal marked with a repeating pseudo-random noise (PN) code of a set number of chips and may be located on ground based control stations, user equipment and/or space vehicles. In a particular example, such transmitters may be located on Earth orbiting satellite vehicles (SVs). For example, a SV in a constellation of Global Navigation Satellite System (GNSS) such as Global Positioning System (GPS), Galileo, Glonass or Compass may transmit a signal marked with a PN code that is distinguishable from PN codes transmitted by other SVs in the constellation (e.g., using different PN codes for each satellite as in GPS or using the same code on different frequencies as in Glonass).

In accordance with certain aspects, the techniques presented herein are not restricted to global systems (e.g., GNSS) for SPS. For example, the techniques provided herein may be applied to or otherwise enabled for use in various regional systems, such as, e.g., Quasi-Zenith Satellite System (QZSS) over Japan, Indian Regional Navigational Satellite System (IRNSS) over India, Beidou over China, etc., and/or various augmentation systems (e.g., an Satellite Based Augmentation System (SBAS)) that may be associated with or otherwise enabled for use with one or more global and/or regional navigation satellite systems. By way of example but not limitation, an SBAS may include an augmentation system(s) that provides integrity information, differential corrections, etc., such as, e.g., Wide Area Augmentation System (WAAS), European Geostationary Navigation Overlay Service (EGNOS), Multi-functional Satellite Augmentation System (MSAS), GPS Aided Geo Augmented Navigation or GPS and Geo Augmented Navigation system (GAGAN), and/or the like. Thus, as used herein an SPS may include any combination of one or more global and/or regional navigation satellite systems and/or augmentation systems, and SPS signals may include SPS, SPS-like, and/or other signals associated with such one or more SPS.

The mobile station 100, however, is not limited to use with an SPS, but position determination techniques described herein may be implemented in conjunction with various wireless communication networks, including cellular towers 104 and from wireless communication access points 106, such as a wireless wide area network (WWAN), a wireless local area network (WLAN), a wireless personal area network (WPAN), and so on. The term "network" and "system" are often used interchangeably. A WWAN may be a Code Division Multiple Access (CDMA) network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, Long Term Evolution (LTE), and so on. A CDMA network may implement one or more radio access technologies (RATs) such as cdma2000, Wideband-CDMA (W-CDMA), and so on. Cdma2000 includes IS-95, IS-2000, and IS-856 standards. A TDMA network may implement Global System for Mobile Communications (GSM), Digital Advanced Mobile Phone System (D-AMPS), or some other RAT. GSM and W-CDMA are described in documents from a consortium named "3rd Generation Partnership Project" (3GPP). Cdma2000 is described in documents from a consortium named "3rd Generation Partnership Project 2" (3GPP2). 3GPP and 3GPP2 documents are publicly available. A WLAN may be an IEEE 802.11x network, and a WPAN may be a Bluetooth network, an IEEE 802.15x, or some other type of network. The techniques may also be implemented in conjunction with any combination of WWAN, WLAN and/or WPAN.

As used herein, a mobile station refers to a device that is capable of determining position location and may be, e.g., a dedicated SPS receiver, including a handheld or vehicular mounted system, or cellular or other wireless communication device, personal communication system (PCS) device, personal navigation device, Personal Information Manager (PIM), Personal Digital Assistant (PDA), laptop or other suitable mobile device which is capable of receiving wireless navigation signals. The term "mobile station" is also intended to include devices which communicate with a personal navigation device (PND), such as by short-range wireless, infrared, wireline connection, or other connection - regardless of whether satellite signal reception, assistance data reception, and/or position-related processing occurs at the device or at the PND. Also, "mobile station" is intended to include all devices, including wireless communication devices, computers, laptops, etc. which are capable of communication with a server, such as via the Internet, Wi-Fi, or other network, and regardless of whether satellite signal reception, assistance data reception, and/or position-related processing occurs at the device, at a server, or at another device associated with the network. Any operable combination of the above are also considered a "mobile station."

The mobile station 100 includes a magnetic field sensor, such a three-dimensional magnetometer, to detect one or more features of the Earth's magnetic field 112. The values of the magnetic field feature with respect to location on the Earth are known and may be included in a table stored in the mobile station 100. The value of the magnetic field feature as measured by the mobile station 100 can be compared to the table to determine a coarse position for the mobile station 100. For example, the inclination angle and/or vertical component of the magnetic field may be used to provide a rough latitude position of the mobile station 100. Moreover, the local time may be used to determine a coarse longitude position, thereby creating the boundaries for a search window or a seed position for the position calculation.

Fig. 2 illustrates various features of the Earth's magnetic field with respect to Earth's coordinate system, e.g., North/South; East/West; and Up/Down. As can be seen, the total magnetic field is a vector that is in the North/South; East/West; and Up/Down space. The horizontal component is the value of the total magnetic field projected on the horizontal plane defined by the North/South and East/West coordinates and declination is the angle that the horizontal component varies from true North. The inclination is the angle that the total magnetic field varies from the horizontal plane and the vertical component is value of the total magnetic field projected on the vertical (Up/Down) axis.

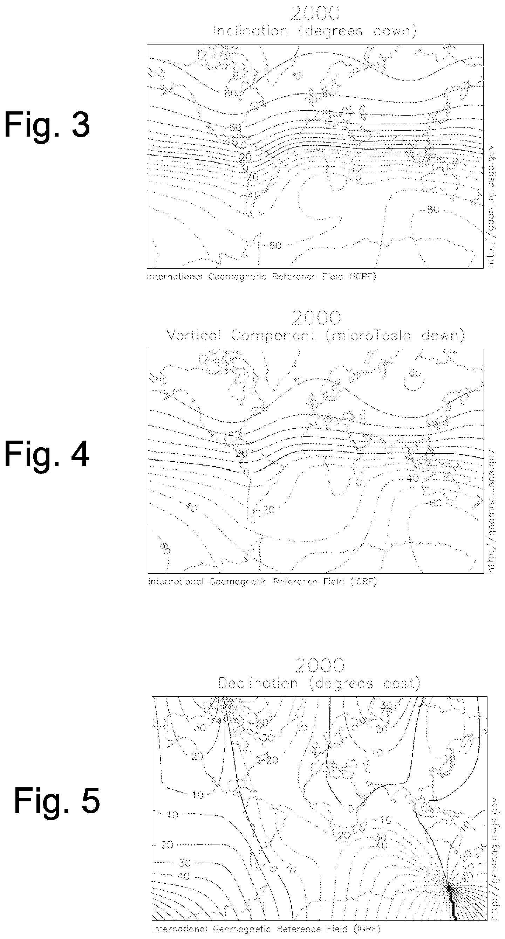

Figs. 3, 4, 5, 6, and 7 illustrate International Geomagnetic Reference Field maps of the inclination, vertical intensity, declination, horizontal intensity and total intensity, respectively, of the Earth's magnetic field for the year 2000. As can be seen in Fig. 3, the iso-inclination lines run approximately parallel to latitude and thus, an approximate latitude can be obtained from the inclination information (i.e. magnetic field orientation angle vs. local horizon). Fig. 4 shows the iso-vertical intensity lines also run approximately parallel to latitude, and thus, may be used to provide an approximate latitude. By way of example of the achievable accuracy, looking at the inclination map in Fig. 3, on the 128W meridian (roughly Los Angeles longitude), the inclination goes from 55° down at 30° latitude to 72° down at 50° latitude, which is approximately a 1° of latitude increase per degree of inclination decrease. Thus, if the determination of the inclination vs. vertical has an uncertainty of about +/-5°, the uncertainty in the latitude is approximately $\pm 550$km ($\approx \pm 5(°)*60('/°)*(1852(m/')$. The accuracy of the determination of the latitude determined by the Earth's magnetic field is adequate to provide an approximate latitude for satellite visibility or seeding the GPS position computation.

As can be seen in Figs. 3, 4, 5, 6 and 7, only the vertical intensity shown in Fig. 4 is truly monotonic in longitude, i.e., there is only one latitude associated with a given vertical intensity value along any meridian. As can be seen in Fig. 3, inclination is mostly monotonic and is monotonic in inhabited regions. The only non-monotonic location in the inclination shown in Fig. 3 is South of Africa, where the -60 microtesla line reverses back onto the same meridian. This area, however, is a non-inhabited area and is likely not to be a problem.

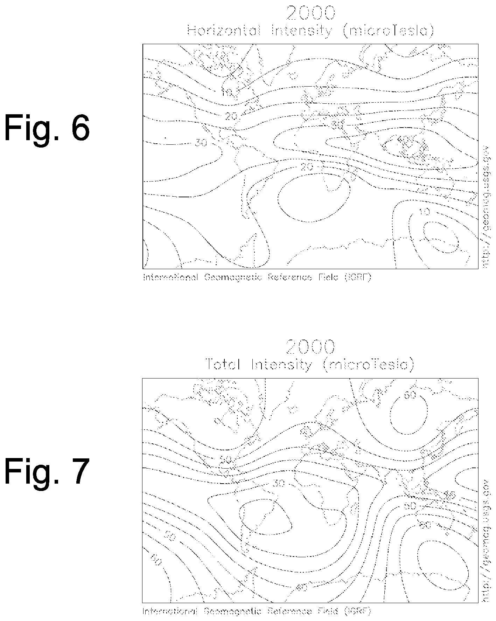

Moreover, over time, e.g., from about 1850 to 1990, both the inclination and the vertical intensity have been stable, with the vertical intensity most stable. Thus, both inclination angle and vertical intensity are suitable for deriving an approximate position. If desired, however, other features of the magnetic field, e.g., total intensity shown in Fig. 7, or combinations of the features may be used to derive an approximate position of the mobile station 100.

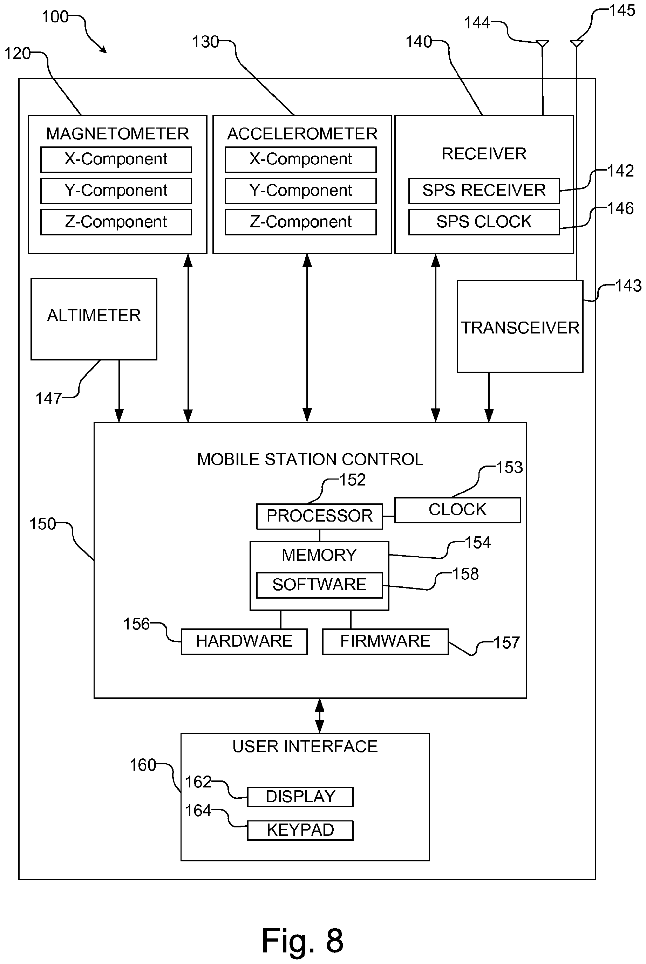

Fig. 8 is a block diagram of the mobile station 100 capable of determining a coarse position fix using the Earth's magnetic field. In order to measure a feature of the Earth's magnetic field, the mobile station 100 includes a three-dimensional magnetometer 120. Additionally, to determine the inclination of the magnetic field or the intensity of the vertical component, the mobile station 100 includes a vertical sensor, i.e., a sensor that can determine the local vertical. In one embodiment, the vertical sensor is a three-dimensional accelerometer 130, which may be used as a tiltometer for the determination of the local vertical. The three axes of sensitivity of both the magnetometer 120 and the accelerometer 130 (labeled as X-Component, Y-Component, and Z-Component) are mutually aligned, or at least have a known orientation with respect to each other, e.g., the orientation may be known at a sub-degree accuracy level.

Mobile station 100 includes a receiver 140, such includes a satellite positioning system (SPS) having a SPS receiver 142 that receives signals from a SPS satellites 102 (Fig. 1) via an antenna 144 and a SPS clock 146. As discussed in reference to Fig. 1, the receiver 140 need not be limited to SPS, but may also receive signals from terrestrial sources, such as cellular towers 104 or from wireless communication access points 106. The mobile station 100 may also include a transceiver 143 that sends and receives signals via antenna 145, which may serve as, e.g., a cellular modem or a wireless network radio receiver/transmitter that is capable of transmitting and receiving communications from a cellular tower or from a wireless access point, respectively. If desired, receiver 140 and transceiver 143 may be combined. The mobile station 100 may include additional devices as well, such as an altimeter 147.

The magnetometer 120, accelerometer 130, receiver 140, transceiver 143 and altimeter 147 are connected to and communicate with a mobile station control 150. The mobile station control 150 accepts and processes data from the various devices in the mobile station, such as the magnetometer 120, the accelerometer 130 and the receiver 140 and controls the operation of the device. The mobile station control 150 may be provided by a processor 152 and associated memory 154, a clock 153, hardware 156, software 158, and firmware 157. It will be understood as used herein that the processor 152 can, but need not necessarily include, one or more microprocessors, embedded processors, controllers, application specific integrated circuits (ASICs), digital signal processors (DSPs), and the like. The term processor is intended to describe the functions implemented by the system rather than specific hardware. Moreover, as used herein the term "memory" refers to any type of computer storage medium, including long term, short term, or other memory associated with the mobile station, and is not to be limited to any particular type of memory or number of memories, or type of media upon which memory is stored.

The mobile station 100 also includes a user interface 160 that is in communication with the mobile station control 150, e.g., the mobile station control 150 accepts data and controls the user interface 160. The user interface 160 includes a display 162 that displays position information as well as control menus and a keypad 164 or other input device through which the user can input information into the mobile station 100. In one embodiment, the keypad 164 may be integrated into the display 162, such as a touch screen display. The user interface 160 may also include, e.g., a microphone and speaker, e.g., when the mobile station 100 is a cellular telephone.

The methodologies described herein may be implemented by various means depending upon the application. For example, these methodologies may be implemented in hardware 156, firmware 157, software 158, or any combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine-readable medium tangibly embodying instructions may be used in implementing the methodologies described herein. For example, software codes may be stored in memory 154 and executed by the processor 152. Memory may be implemented within the processor unit or external to the processor unit. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or code on a computer-readable medium. Examples include computer-readable media encoded with a data structure and computer-readable media encoded with a computer program. Computer-readable media includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

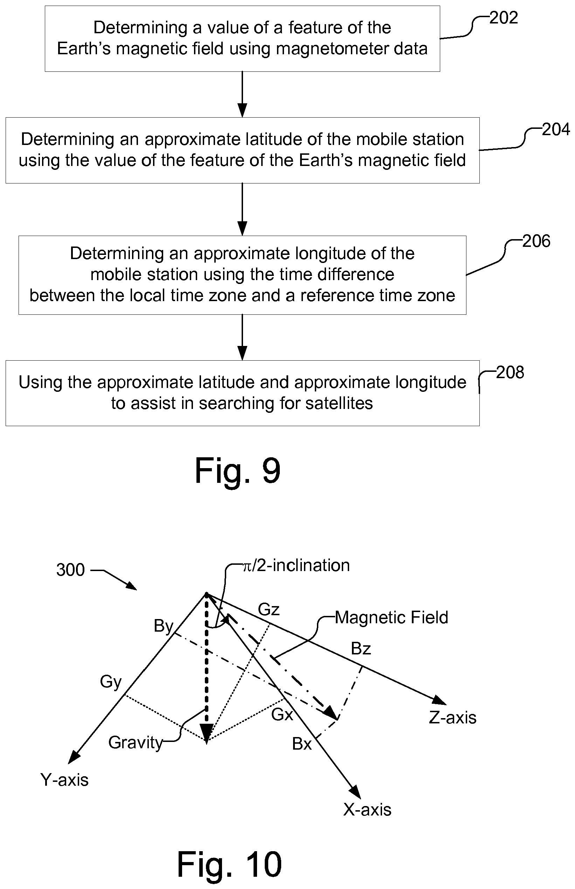

Fig. 9 is a flow chart showing a method of determining a coarse position fix using the Earth's magnetic field and using the coarse position fix to assist in searching for satellites, e.g., by determining if the current seed position is still useful/consistent and, if not, using coarse position as the seed position and to expand the search window size based on the uncertainty of the coarse position. As illustrated in Fig. 9, the mobile station 100 determines a value of at least one feature of the Earth's magnetic field using magnetometer data (202) and uses the value of the component to determine an approximate latitude of the mobile station (204). By way of example, the inclination angle or vertical intensity of the magnetic field may be used.

The inclination angle or vertical intensity of the Earth's magnetic field may be determined using the magnetometer 120 of the mobile station 100 with reference to the local vertical direction. The local vertical direction may be determined using a vertical sensor, such as the accelerometer 130, illustrated in Fig. 8, operating as a tiltometer. Fig. 10 illustrates a common reference system 300 for the magnetometer 120 and the accelerometer 130 oriented in an arbitrary down position with respect to the local vertical, which is labeled "Gravity". As illustrated in Fig. 10, the three sensitive axes of the magnetometer 120 and accelerometer 130 are aligned with each other. It should be understood, however, that the axes of the magnetometer 120 and accelerometer need not be aligned, but the orientation of the axes with respect to each other should be known with sub-degree accuracy.

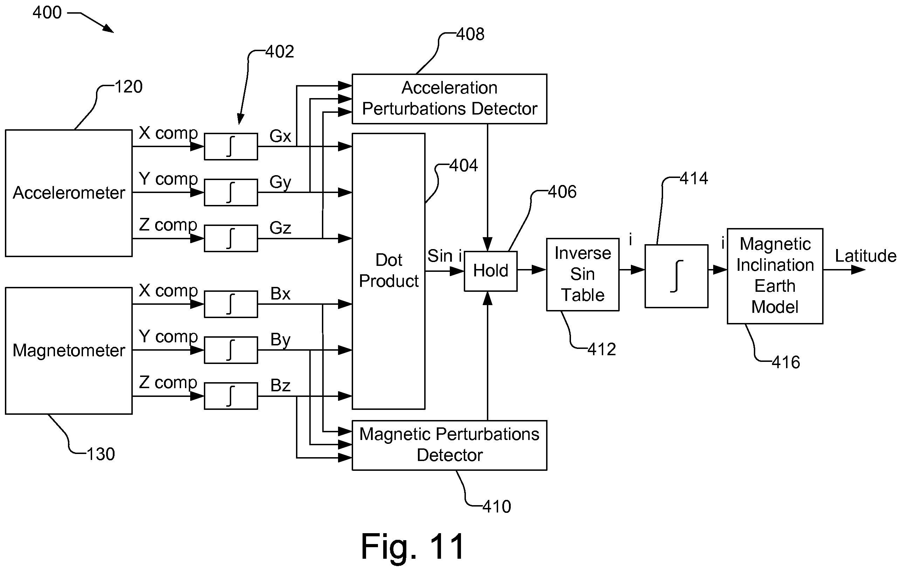

Fig. 11 is a block diagram 400 illustrating the determination of a value of at least one feature of the Earth's magnetic field using the magnetometer 120 and accelerometer 130 (block 202 of Fig. 9) and using the value of the feature to determine an approximate latitude of the mobile station (block 204 of Fig. 9). It should be understood, as discussed above, that the features described in block diagram 400 may be implemented in hardware, firmware, or software or some combination thereof. As shown in Fig. 11, the magnetometer 120 and accelerometer 130, each provide three component measurements, labeled X comp, Y comp, and Z comp. The measurements from the magnetometer 120 and accelerometer 130 can be made at a rate, e.g., between 10 and 20Hz. If desired, a short integration in the order of 0.2 seconds can be applied on all measurements to filter out some measurement noise, as illustrated as integration elements 402. The integration elements 402 produce three magnetic field data values (Bx, By, and Bz) from the magnetometer 120 and three acceleration data values (Gx, Gy, and Gz) from the accelerometer 130. The instantaneous value of the inclination i can be extracted from the six measured data values using, e.g., the following dot-product formula:

$$\sin i = \cos\left(\frac{\pi}{2} - i\right) = \frac{Gx \cdot Bx + Gy \cdot By + Gz \cdot Bz}{\sqrt{Gx^2 + Gy^2 + Gz^2} \cdot \sqrt{Bx^2 + By^2 + Bz^2}} . \qquad \text{eq. 1}$$

Thus, as illustrated in Fig. 11, the six data values (Bx, By, Bz, Gx, Gy, and Gz) may be provided to dot product logic 404, which generates a signal *Sin i*.

As discussed above, if desired additional or different features of the magnetic field may be used. For example, the vertical intensity of the magnetic field may be used of or in addition to the inclination. The instantaneous value of the vertical intensity *vi* can be can be extracted from the six measured data values using the dot product logic 404 applying, e.g., the following dot-product formula:

$$vi = \frac{Gx \cdot Bx + Gy \cdot By + Gz \cdot Bz}{\sqrt{Gx^2 + Gy^2 + Gz^2}} . \qquad \text{eq. 2}$$

If the total intensity of the magnetic field is to be used, e.g., in place of or in addition to one or both of the inclination and the vertical intensity, the instantaneous value of the total intensity *ti* can be extracted from the three data values from the magnetometer by logic 404 using, e.g., the following formula:

$$ti = \sqrt{Bx^2 + By^2 + Bz^2} . \qquad \text{eq. 3}$$

As illustrated in Fig. 11, a hold element 406 may be used to receive the instantaneous inclination *Sin i* value produced by the dot product logic 404. Hold element 406 also receives input signals from an acceleration perturbation detector 408 and a magnetic perturbation detector 410. The magnetic perturbation detector 410 receives the three data values (Bx, By, and Bz) from the magnetometer 120 and detects perturbations in the magnetic field. For example, the magnetic perturbation detector 410 may detect whether the total intensity value falls within the expected range of 30 to 60 microteslas. A measured value outside this range indicates the presence of an error source, such as a large metallic mass or non-terrestrial magnetic field, that will generate an inaccurate estimation of the inclination. The magnetic perturbation detector 410 provides a signal to the hold element 406 indicating the presence of a perturbation in the magnetic field and, in response, the hold element 406 prevents the corresponding and perturbed instantaneous inclination *Sin i* value from being integrated in the integration element 414.

Similarly, the acceleration perturbation detector 408 receives the three data values (Gx, Gy, and Gz) from the accelerometer 130 and analyzes the data to determine if a perturbation in the dynamics on the accelerometer 130 is present. For example, the acceleration perturbation detector 408 may detect whether the total acceleration is within an expected range around 1G, e.g., 1.0G ±0.25G. A different expected range may be used, but the range should be large enough to accommodate geographical variations in gravity acceleration, which may vary approximately 0.5% from pole to equator. A measured value outside the expected range indicates the presence of an error source, such as a large amount of user motion, which will generate an inaccurate estimate of inclination. Accordingly, the acceleration perturbation detector 408 provides a signal to the hold element 406 indicating the presence of a perturbation in the dynamics and, in response, the hold element 406 prevents the corresponding instantaneous inclination *Sin i* value from being integrated by the integration element 414.

If no perturbations are present, the hold element 406 provides the instantaneous inclination *Sin i* value to be compared to an inverse Sin table 412, thereby producing an instantaneous inclination i value. It should be understood that the hold element 406, if used, may be located after the inverse Sin table 412, if desired. The dot product logic 404, hold element 406, and inverse Sin table 412 may be updated at a rate of 1 sample every 0.2s, as are the detections by the acceleration perturbation detector 408 and magnetic perturbation detector 410.

As illustrated in Fig. 11, the instantaneous inclination i value is provided to a integration element 414, which performs a long term integration, e.g., over a period of time 10 seconds to 2 minutes or more, to filter out the effects of metallic masses on the magnetometer 120 and dynamics, e.g., movement of the mobile station 100, on the accelerometer 130 thereby improving the accuracy of inclination estimate. As discussed above, the magnetometer 120 is sensitive to the local metallic masses and the accelerometer 130 is sensitive to user motion. Accordingly, the magnetometer 120 and accelerometer 130 may provide false instantaneous magnetic field and local vertical information when a local metallic mass is nearby or when the user is in motion, even if the measured values are within the acceptable ranges of the magnetic perturbation detector 410 and acceleration perturbation detector 408. Thus, for example, user motion may produce an instantaneous acceleration that will result in an instantaneous local vertical that is incorrect. Over time, however, the average acceleration is zero even when there is user motion. The individual measurements of gravity and magnetic field are high frequency, while the inclination value *i* is quasi constant. Consequently, the inclination value *i* can be filtered over a long period of time to reduce or eliminate the effects of the temporary presence of metallic masses or user motion. The filtering of the instantaneous inclination i value may be performed in the background at a low rate so that the solution is ready when needed. By way of example, integration element 414 may produce an instantaneous inclination i value every 10 seconds.

The integration element 414 produces an average inclination i value that is then compared to the magnetic inclination Earth model 416, which may be a table of inclination values with respect to latitude, to convert the inclination i value to an approximate latitude of the mobile station, which is stored in memory 154. The final measurement after model 416 may be produced once every 10 seconds. The approximate latitude can then be used to determine the satellite visibility list, and thus reduce the GPS or GNSS satellite search time and complexity in an autonomous mode. It can be also used for seeding the position computation algorithms to converge faster to the true position.

As discussed above, other features of the Earth's magnetic field may be additionally or alternatively used. For example, the vertical intensity or the total intensity may be used in the determination of the latitude in a manner similar to that described above and in Fig. 11, except that the inverse Sin table 412 would be unnecessary and the appropriate magnetic Earth model 416 would be used.

The position of the mobile station can be further narrowed by determining an approximate longitude. In general, no magnetic field features exist with iso lines neatly aligned roughly in a North-South fashion along the meridians. The declination shown in Fig. 5 has some vertical iso-lines, but declination requires a knowledge of true North, which neither the magnetometer 120 nor the accelerometer 130 can provide. The total intensity also has some vertical iso lines, however, the total intensity includes significant ambiguities and a large variability over time. Nevertheless, it may be possible to combine two or more magnetic field feature measurements, such as inclination and total intensity, to derive an approximate longitude. Thus, using the magnetometer 120 and accelerometer 130, an approximate latitude and longitude may be derived. The solution for longitude, however, may not be unique, i.e., more than one longitude will have the same combination of values for the measured magnetic field features. Additional geographic or environmental information may be received by the mobile station 100 and used in conjunction with the magnetic field feature measurements to further refine the approximate longitude. For example, geographic area designators, such as area code or country code, commonly used in telephone systems, may be received from a local cellular tower 104 by transceiver 143 and used with the magnetic field feature measurements to refine the approximate longitude. Other environmental information such as the altitude of the mobile station 100, as determined by altimeter 147, visible base stations, or visible radio signals as received by receiver 140 or transceiver 143 may be used to assist in determining longitude. An approximate longitude, even if non-unique, derived from magnetic field features with or without additional information such as area code, country code, or altitude, nevertheless, may be used to further narrow the satellite visibility list. Moreover, in some embodiments, the approximate longitude and approximate latitude may have sufficient resolution that it may be used in place of a satellite positioning system.

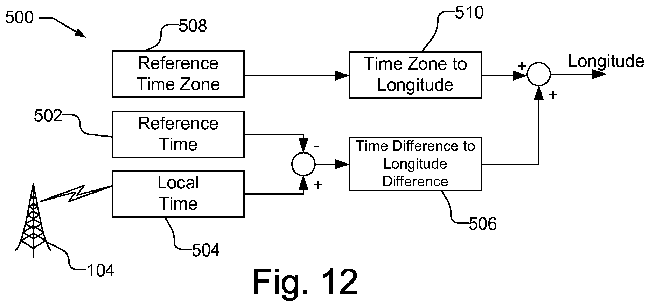

Referring to Fig. 9, an approximate longitude of the mobile station may be determined using the time difference between the local time zone and a reference time zone (206). Fig. 12 is a block diagram 500 illustrating the determination of longitude based on the time difference between the local time and a reference time. The reference time is the time at a location with a known position, e.g., the location of the last good fix, a permanent location such as a home location or other known location, e.g., Greenwich, and may include the time of a time zone where the position of the time zone is a range of longitudes. As illustrated, to produce a time difference, the reference time 502 is compared to a local time 504, which may be obtained from a time signal from a local cellular tower 104 or wireless communication access point 106 (shown in Fig. 1) that is received by mobile station 100, or by user input via the keypad 164. In one embodiment, the time difference is calculated as the difference in the time at the local time zone and the time at the reference time zone. The time at the reference time zone may be maintained, e.g., by a clock 153. In another embodiment, the time difference is determined by counting the number of time zones between the local time zone and the reference time zone. For example, the mobile station 100 may increment or decrement a count, depending on direction of travel, for every time zone between the local time zone and the reference time zone. The count may be stored, e.g., in memory 154, and may be updated as necessary whenever the mobile station 100 updates the local time.

The time difference between the reference time 502 and the local time 504 is converted to a longitude difference (506). Aside from some specific locations (e.g., where the time zones are incremented by half an hour), the time zones are in integer numbers of hours difference, where one hour is equivalent to 15° of longitude, and thus, the uncertainty is $\pm 7.5°$ or $\pm 8000km$ at the equator.

Additionally, the reference time zone 508 is converted into a longitude 510, which may be stored, e.g., in memory 154. The longitude difference 506 is combined with the reference longitude 510 to determine the approximate longitude of the mobile station 100, which is stored in memory 154.

With an approximate latitude determined using a feature of the Earth's magnetic field, and an approximate longitude determined by comparing the local time and the time at a home location, the approximate position of the mobile station 100 is a roughly square cell, which at the equator has total dimensions of 1100km in latitude by 1600km in longitude.

Referring to Fig. 9, the approximate latitude and approximate longitude may then be used to assist in searching for satellites (208). The mobile station 100 may compare the approximate latitude and approximate longitude with the last position fix to determine if the last position fix may be used as a seed position. If the mobile station has not moved significantly, e.g., the last position fix is consistent with the approximate latitude and approximate longitude, the mobile station 100 may use the last position fix as the seed position for the search and use a moderately sized initial search window, e.g., on the order of miles or tens of miles, based on that seed position. If, however, the last position fix is not consistent with the approximate latitude and approximate longitude, the approximate latitude and approximate longitude may be used as the seed position and the search window is enlarged based on the uncertainty in the approximate latitude and approximate longitude. Thus, instead of performing a worldwide search, which is slow, the approximate latitude and approximate longitude may be used along with the almanac information to generate a reduced list of satellites are visible, and thus reduce the GPS or GNSS satellite search time and complexity in an autonomous mode. The visible satellite list may be stored, e.g., in memory 154, and a search conducted by the mobile station 100 in response to the list.

Although the present invention is illustrated in connection with specific embodiments for instructional purposes, the present invention is not limited thereto. Various adaptations and modifications may be made without departing from the scope of the invention. Therefore, the scope of the appended claims should not be limited to the foregoing description.

**Claims**

1. A method comprising:

   determining (204) an approximate latitude of a mobile station (100) using a mobile station processor (152) based on at least one feature of the Earth's magnetic field measured by the mobile station;
   receiving a wireless signal from a base station (104) with at least one of a local time signal or an area or country code signal;
   determining an approximate longitude of the mobile station (100) using the mobile station processor (152);
   wherein determining an approximate longitude of the mobile station using the mobile station processor is based on a time difference between a local time and a reference time, wherein the reference time is the time at a location with a known position and the local time zone is obtained from the received local time, area code or country code signal from said wireless signal;
   storing the approximate latitude and the approximate longitude and using the approximate latitude and the approximate longitude in the search for satellites (102) in a satellite positioning system, SPS, that are visible to the mobile station (100) during search and acquisition of satellite signals for a position fix; and

   wherein the at least one feature of the Earth's magnetic field is selected from inclination angle and vertical intensity.

2. The method of claim 1, wherein using the approximate latitude and the approximate longitude in the search for satellites (102) in a satellite positioning system, SPS, that are visible to the mobile station (100) during search and acquisition of satellite signals for a position fix comprises determining whether to use a last position fix for the mobile station as a seed position for the search for satellites by comparing the approximate latitude and the approximate longitude to a last position fix.

3. The method of claim 1, wherein using the approximate latitude and the approximate longitude in the search for satellites in a satellite positioning system, SPS, that are visible to the mobile station (100) during search and acquisition of satellite signals for a position fix comprises using the approximate latitude and the approximate longitude as a seed position for the search for satellites (102).

4. The method of claim 1, wherein determining an approximate latitude of a mobile station (100) using a mobile station processor (152) based on at least one feature of the Earth's magnetic field measured by the mobile station comprises:

   collecting data from a three-dimensional magnetometer (120) inside the mobile station;
   determining a value of the at least one feature of the Earth's magnetic field using the mobile station processor based on the collected data from the three-dimensional magnetometer (120); and
   converting the value of the at least one feature into an approximate latitude.

5. The method of claim 4, wherein determining an approximate latitude of a mobile station (100) using at least one feature of the Earth's magnetic field measured by the mobile station (100) further comprises:

   collecting local vertical data; and
   using the local vertical data with the collected data from the three-dimensional magnetometer (120) to determine the value of the at least one feature of the Earth's magnetic field.

6. The method of claim 4, wherein determining an approximate latitude of a mobile station (100) using at least one feature of the Earth's magnetic field measured by the mobile station further comprises:

collecting data from a three-dimensional accelerometer (130) inside the mobile station, the three-dimensional accelerometer having a known orientation with respect to the three-dimensional magnetometer (120); and using the collected data from the three-dimensional accelerometer (130) with the collected data from the three-dimensional magnetometer (120) to determine the value of the at least one feature of the Earth's magnetic field.

7. The method of claim 6, further comprising filtering the data collected from the three-dimensional accelerometer (130) and filtering the data collected from the three-dimensional magnetometer (120) and using the filtered data collected from the three-dimensional accelerometer and the filtered data collected from the three-dimensional magnetometer (120) to determine the value of the at least one feature of the Earth's magnetic field.

8. The method of claim 6, wherein using the collected data from the three-dimensional accelerometer (130) with the collected data from the three-dimensional magnetometer (120) to determine the value of the at least one feature of the Earth's magnetic field comprises:

   generating an instantaneous value of the at least one feature of the Earth's magnetic field using the mobile station processor (152) based on the collected data from the three-dimensional magnetometer with the collected data from the three-dimensional accelerometer (130); and
   averaging the instantaneous value to produce the value of the at least one feature of the Earth's magnetic field.

9. The method of claim 6, further comprising:

   detecting acceleration perturbations in the data collected from the three-dimensional accelerometer (130);
   detecting magnetic perturbations in the data collected from the three-dimensional magnetometer (120); and
   preventing the collected data from the three-dimensional accelerometer and the collected data from the three-dimensional magnetometer from being used to determine the value of the at least one feature of the Earth's magnetic field when at least one of detected acceleration perturbations and detected magnetic perturbations are outside a range.

10. The method of claim 1, wherein determining an approximate longitude of the mobile station (100) using the mobile station processor (152) based on a time difference between a local time zone and a reference time zone further comprises:

    storing a longitude from the reference time zone;
    determining the time difference between the local time zone and the reference time zone;
    converting the time difference to a longitude difference; and
    using the longitude difference and the longitude from the reference time zone to determine the approximate longitude of the mobile station.

11. The method of claim 10, wherein determining the time difference between the local time zone and the reference time zone comprises determining the number of times zones between the local time zone and the reference time zone, or
    wherein determining the time difference between the local time zone and the reference time zone comprises calculating the difference in time at the local time zone and time at the reference time zone.

12. A mobile station (100) comprising:

    means (120) for measuring at least one feature of the Earth's magnetic field;
    means for determining an approximate latitude of the mobile station (100) using the measured at least one feature of the Earth's magnetic field;
    means for receiving a wireless signal from a base station with at least one of a local time signal or an area or country code signal;
    means for determining an approximate longitude of the mobile station, wherein the means for determining determine an approximate longitude of the mobile station using the mobile station processor based on a time difference between a local time and a reference time, wherein the reference time is the time at a location with a known position and the local time zone is obtained from the received local time or the received area or country code signal from said wireless signal;
    means for using the approximate latitude and the approximate longitude in the search for satellites (102) in a satellite positioning system, SPS, that are visible to the mobile station during search and acquisition of satellite signals for a position fix; and
wherein the at least one feature of the Earth's magnetic field is selected from inclination angle and vertical intensity.

13. The mobile station (100) of claim 12, wherein the means for measuring at least one feature of the Earth's magnetic field comprises a three-dimensional magnetometer (120) and a three-dimensional accelerometer (130) that has a known orientation with respect to the three- dimensional magnetometer, and a processor that receives data from the three- dimensional magnetometer and the three-dimensional accelerometer and calculates a value for the at least one feature of the Earth's magnetic field, and preferably
further comprising a means for filtering out perturbation effects of metallic masses on the three-dimensional magnetometer (120) and motion of the three-dimensional accelerometer (130).

14. The mobile station (100) of claim 12, further comprising a means for detecting acceleration perturbations;
a means for detecting magnetic perturbations; and
a means to prevent the data from the three-dimensional accelerometer and the data from the three- dimensional magnetometer from being used to calculate a value for the at least one feature of the Earth's magnetic field when at least one of detected acceleration perturbations and detected magnetic perturbations are outside a range.

15. A computer-readable medium including program code stored thereon, comprising:

program code to carry out the steps of any of claims 1 to 11.


**Patentansprüche**

1. Ein Verfahren, das folgendes aufweist:

Bestimmen (204) eines ungefähren Breitegrads einer Mobilstation (100) unter Nutzen eines Mobilstationsprözessors (152) basierend auf mindestens einem Merkmal des Erdmagnetfeldes, das durch die Mobilstation gemessen wurde;
Empfangen eines Drahtlossignals von einer Basisstation (104) mit mindestens einem lokalen Zeitsignal und/oder einem Gebiets- oder Landcodesignal;
Bestimmen eines ungefähren Längengrads der Mobilstation (100) unter Nutzen des Mobilstationsprozessors (152); wobei Bestimmen eines ungefähren Längengrads der Mobilstation unter Nutzen des Mobilstationsprozessors auf einer Zeitdifferenz zwischen einer Lokalzeit und einer Referenzzeit basiert, wobei die Referenzzeit die Zeit an einem Ort mit einer bekannten Position ist, und die Lokalzeitzone von dem empfangenen Lokalzeit-, dem Gebietscode- oder Landcodesignal aus dem Drahtlossignal erlangt wird;
Speichern des ungefähren Breitegrads und des ungefähren Längengrads und Nutzen des ungefähren Breitegrads und des ungefähren Längengrads für die Suche nach Satelliten (102) in einem Satellitenpositionssystem, SPS, die für die Mobilstation (100) während Suche und Akquisition von Satellitensignalen für eine Positionsbestimmung sichtbar sind; und
wobei das mindestens eine Merkmal des Erdmagnetfeldes von einem der folgenden ausgewählt wird: Neigungswinkel und Vertikalintensität.

2. Verfahren nach Anspruch 1, wobei Nutzen des ungefähren Breitengrads und des ungefähren Längengrads für die Suche nach Satelliten (102) in einem Satellitenpositionsbestimmungssystem, SPS, die für die Mobilstation (100) während Suche und Akquisition von Satellitensignalen für eine Positionsbestimmung sichtbar sind, Bestimmen aufweist, ob mindestens eine letzte Positionsbestimmung der Mobilstation als eine Anfangsposition für die Suche nach Satelliten genutzt wird, und zwar durch Vergleichen des ungefähren Breitengrads und des ungefähren Längengrads mit einer letzten Positionsbestimmung.

3. Verfahren nach Anspruch 1, wobei Nutzen des ungefähren Breitengrads und des ungefähren Längengrads für die Suche nach Satelliten in einem Satellitenpositionsbestimmungssystem, SPS, die für die Mobilstation (100) während Suche und Akquisition von Satellitensignalen für eine Positionsbestimmung sichtbar sind, Nutzen des ungefähren Breitengrads und des ungefähren Längengrads als eine Anfangsposition für die Suche nach Satelliten (102) aufweist.

4. Verfahren nach Anspruch 1, wobei Bestimmen eines ungefähren Breitegrads einer Mobilstation (100) unter Nutzen eines Mobilstationsprozessors (152) basierend auf mindestens einem Merkmal des Erdmagnetfeldes, dass durch die Mobilstation gemessen wird, folgendes aufweist:

Sammeln von Daten von einem dreidimensionalen Magnetometer (120) inherhalb der Mobilstation;
Bestimmen eines Werts des mindestens einen Merkmals des Erdmagnetfeldes unter Nutzen des Mobilstationsprozessors basierend auf den gesammelten Daten von dem dreidimensionalen Magnetometer (120); und
Umwandeln des Werts des mindestens einen Merkmals in einen ungefähren Breitengrad.

5. Verfahren nach Anspruch 4, wobei Bestimmen eines ungefähren Breitengrads einer Mobilstation (100) unter Nutzen des mindestens einen Merkmals des Erdmagnetfeldes, das durch die Mobilstation (100) gemessen wurde, ferner folgendes aufweist:

Sammeln von lokalen Vertikaldaten; und
Nutzen der lokalen Vertikaldaten mit den gesammelten Daten von dem dreidimensionalen Magnetometer (120) zum Bestimmen des Werts des mindestens einen Merkmals des Erdmagnetfeldes.

6. Verfahren nach Anspruch 4, wobei Bestimmen eines ungefähren Breitengrads einer Mobilstation (100) unter Nutzen des mindestens einen Merkmals des Erdmagnetfeldes, das durch die Mobilstation gemessen wurde, ferner folgendes aufweist:

Sammeln von Daten von einem dreidimensionalen Beschleunigungsmesser (130) innerhalb der Mobilstation, wobei der dreidimensionale Beschleunigungsmesser eine bekannte Orientierung in Bezug auf das dreidimensionale Magnetometer (120) hat; und
Nutzen der gesammelten Daten von dem dreidimensionalen Beschleunigungsmesser (130) mit den gesammelten Daten von dem dreidimensionalen Magnetometer (120) zum Bestimmen des Werts des mindestens einen Merkmals des Erdmagnetfeldes.

7. Verfahren nach Anspruch 6, das ferner Filtern der Daten, die von dem dreidimensionalen Beschleunigungsmesser (130) gesammelt wurden, und Filtern der Daten, die von dem dreidimensionalen Magnetometer (120) gesammelt wurden, und Nutzen der gesammelten Daten von dem dreidimensionalen Beschleunigungsmesser gesammelt wurden mit den gesammelten Daten von dem dreidimensionalen Magnetometer (120) zum Bestimmen des Werts des mindestens einen Merkmals des Erdmagnetfeldes.

8. Verfahren nach Anspruch 6, wobei Nutzen der gesammelten Daten von dem dreidimensionalen Beschleunigungsmesser (130) mit den gesammelten Daten von dem dreidimensionalen Magnetometer (120), zum Bestimmen des Werts des mindestens einen Merkmals des Erdmagnetfeldes folgendes aufweist:

Erzeugen eines Augenblickwerts des mindestens einen Merkmals des Erdmagnetfeldes unter Nutzen des Mobilstationsprozessors (152) basierend auf den gesammelten Daten des dreidimensionalen Magnetometers und den gesammelten Daten des dreidimensionalen Beschleunigungsmessers (130); und
Ausmitteln des Augenblickwerts zum Erzeugen des Werts des mindestens einen Merkmals des Erdmagnetfeldes.

9. Verfahren nach Anspruch 6, dass ferner folgendes aufweist:

Detektieren von Beschleunigungstörungen in den gesammelten Daten von dem dreidimensionalen Beschleunigungsmesser (130);
Detektieren von magnetischen Störungen in den gesammelten Daten von dem dreidimensionalen Magnetometer (120); und
Verhindern, dass die gesammelten Daten von dem dreidimensionalen Beschleunigungsmesser und die gesammelten Daten von dem dreidimensionalen Magnetometer zum Bestimmen des Werts von dem mindestens einen Merkmal des Erdmagnetfeldes genutzt werden, wenn mindestens die detektierten Beschleunigungsstörungen und/oder die detektierten Magnetstörungen außerhalb eines Bereichs liegen.

10. Verfahren nach Anspruch 1, wobei Bestimmen eines ungefähren Längengrads der Mobilstation (100) unter Nutzen des Mobilstationsprozessors (152) basierend auf einem Zeitunterschied zwischen einer Lokalzeitzone und einer Referenzzeitzone ferner folgendes aufweist:

Speichern eines Längengrads der Referenzzeitzone;

Bestimmen der Zeitdifferenz zwischen der Lokalzeitzone und der Referenzzeitzone;

Umwandeln der Zeitdifferenz in eine Längengraddifferenz; und

Nutzen der Längengraddifferenz und des Längengrads von der Referenzzeitzone zum Bestimmen des ungefähren Längengrads der Mobilstation.

11. Verfahren nach Anspruch 10, wobei Bestimmen der Zeitdifferenz zwischen der Lokalzeitzone und der Referenzzeitzone Bestimmen der Anzahl von Zeitzonen zwischen der Lokalzeitzone und der Referenzzeitzone aufweist, oder wobei Bestimmen der Zeitdifferenz zwischen der Lokalzeitzone und der Referenzzeitzone Berechnen der Differenz in Zeit in der Lokalzeitzone und Zeit in der Referenzzeitzone aufweist.

12. Eine Mobilstation (100), die folgendes aufweist:

Mittel (120) zum Messen mindestens eines Merkmals des Erdmagnetfeldes;

Mittel zum Bestimmen eines ungefähren Breitengrads der Mobilstation (100) unter Nutzen des gemessenen mindestens einen Merkmals des Erdmagnetfeldes;

Mittel zum Empfangen eines Drahtlossignals von einer Basisstation mit mindestens einem Lokalzeitsignal und/oder einem Gebiets- oder Landcodesignal;

Mittel zum Bestimmen eines ungefähren Längengrads der Mobilstation, wobei die Mittel zum Bestimmen eines ungefähren Längengrads der Mobilstation den Mobilstationsprozessor basierend auf einer Zeitdifferenz zwischen einer Lokalzeit und einer Referenzzeit nutzen, wobei die Referenzzeit eine Zeit an einem Ort mit einer bekannten Position ist und die Lokalzeitzone von dem empfangenden Lokalzeit-, dem Gebietscode- oder Landcodesignal aus dem Drahtlossignal erlangt wird;

Mittel zum Nutzen des ungefähren Breitengrads und des ungefähren Längengrads für die Suche nach Satelliten (102) in einem Satellitenpositionsbestimmungssystem, SPS, die für die Mobilstation während Suche und Akquisition von Satellitensignalen für eine Positionsbestimmung sichtbar sind; und

wobei das mindestens eine Merkmal des Erdmagnetfelds von einem der folgenden ausgewählt wird: Neigungswinkel und Vertikalintensität.

13. Mobilstation (100) nach Anspruch 12, wobei die Mittel zum Messen des mindestens einen Merkmals des Erdmagnetfelds folgendes aufweisen: ein dreidimensionales Magnetometer (120) und einen dreidimensionalen Beschleunigungsmesser (130), der eine bekannte Orientierung in Bezug auf das dreidimensionale Magnetometer hat, und einen Prozessor, der Daten von dem dreidimensionalen Magnetometer und dem dreidimensionalen Beschleunigungsmesser empfängt und einen Wert für das mindestens eine Merkmal des Erdmagnetfelds berechnet, und bevorzugt

ferner Mittel zum Ausfiltern von Störeffekten von metallischen Massen auf das dreidimensionale Magnetometer (120) und Bewegung des dreidimensionalen Beschleunigungsmessers (130) aufweist.

14. Mobilstation (100) nach Anspruch 12, die ferner folgendes aufweist:

ein Mittel zum Erkennen von Beschleunigungsstörungen;

ein Mittel zum Erkennen von Magnetstörungen; und

ein Mittel zum Verhindern, dass die Daten von dem dreidimensionalen Beschleunigungsmesser und die Daten von dem dreidimensionalen Magnetometer zum Berechnen eines Werts des mindestens einen Merkmals des Erdmagnetfelds genutzt werden, wenn die erkannte Beschleunigungsstörungen und/oder die erkannte Magnetfeldstörungen außerhalb eines Bereichs sind.

15. Ein computerlesbares Medium, das Programmcode darauf gespeichert hat, der folgendes aufweist:

Programmcode zum Ausführen der Schritte nach irgendeinem der Ansprüche 1-11.

**Revendications**

1. Procédé comprenant :

déterminer (204) une latitude approximative d'un poste mobile (100) en utilisant un processeur de poste mobile (152) sur la base d'au moins une caractéristique du champ magnétique terrestre mesurée par le poste mobile ;

recevoir un signal sans fil à partir d'une station de base (104) comprenant au moins l'un d'un signal de temps local ou d'un signal de code de région ou de pays ;

déterminer une longitude approximative du poste mobile (100) en utilisant le processeur de poste mobile (152) ;

la détermination d'une longitude approximative du poste mobile en utilisant le processeur du poste mobile étant basée sur une différence de temps entre un temps local et un temps de référence, le temps de référence étant le temps au niveau d'un emplacement ayant une position connue et la zone de temps local étant obtenue à partir du signal de temps local, de code de région ou de pays reçu dans le signal sans fil ;

mémoriser la latitude approximative et la longitude approximative et utiliser la latitude approximative et la longitude approximative dans la recherche de satellites (102) dans un système de positionnement par satellites, SPS, qui sont visibles du poste mobile (100) pendant la recherche et l'acquisition de signaux de satellites pour un relevé de position ; et

dans lequel ladite au moins une caractéristique du champ magnétique terrestre est sélectionnée parmi un angle d'inclinaison et une intensité verticale.

2. Procédé selon la revendication 1, dans lequel l'utilisation de la latitude approximative et de la longitude approximative dans la recherche de satellites (102) dans un système de positionnement par satellites, SPS, qui sont visibles du poste mobile (100) pendant la recherche et l'acquisition de signaux de satellites pour un relevé de position comprend le fait de déterminer s'il faut utiliser un dernier relevé de position pour le poste mobile comme position d'amorçage pour la recherche de satellites en comparant la latitude approximative et la longitude approximative à un dernier relevé de position.

3. Procédé selon la revendication 1, dans lequel l'utilisation de la latitude approximative et de la longitude approximative dans la recherche de satellites dans un système de positionnement par satellites, SPS, qui sont visibles du poste mobile (100) pendant la recherche et l'acquisition de signaux de satellites pour un relevé de position comprend l'utilisation de la latitude approximative et de la longitude approximative comme position d'amorçage pour la recherche de satellites (102).

4. Procédé selon la revendication 1, dans lequel la détermination d'une latitude approximative d'un poste mobile (100) en utilisant un processeur de poste mobile (152) sur la base d'au moins une caractéristique du champ magnétique terrestre mesurée par le poste mobile comprend :

recueillir des données à partir d'un magnétomètre tridimensionnel (120) se trouvant à l'intérieur du poste mobile ;

déterminer une valeur de ladite au moins une caractéristique du champ magnétique terrestre en utilisant le processeur du poste mobile sur la base des données recueillies à partir du magnétomètre tridimensionnel (120) ; et

convertir la valeur de ladite au moins une caractéristique en une latitude approximative.

5. Procédé selon la revendication 4, dans lequel la détermination d'une latitude approximative d'un poste mobile (100) en utilisant au moins une caractéristique du champ magnétique terrestre mesurée par le poste mobile (100) comprend en outre :

recueillir des données verticales locales ; et

utiliser les données verticales locales avec les données recueillies à partir du magnétomètre tridimensionnel (120) pour déterminer la valeur de ladite au moins une caractéristique du champ magnétique terrestre.

6. Procédé selon la revendication 4, dans lequel la détermination d'une latitude approximative d'un poste mobile (100) en utilisant au moins une caractéristique du champ magnétique terrestre mesurée par le poste mobile comprend en outre :

recueillir des données à partir d'un accéléromètre tridimensionnel (130) se trouvant à l'intérieur du poste mobile, l'accéléromètre tridimensionnel ayant une orientation connue par rapport au magnétomètre tridimensionnel (120) ; et

utiliser les données recueillies à partir de l'accéléromètre tridimensionnel (130) avec les données recueillies à partir du magnétomètre tridimensionnel (120) pour déterminer la valeur de ladite au moins une caractéristique du champ magnétique terrestre.

7. Procédé selon la revendication 6, comprenant en outre un filtrage des données recueillies à partir de l'accéléromètre tridimensionnel (130) et un filtrage des données recueillies à partir du magnétomètre tridimensionnel (120) et l'utilisation des données filtrées recueillies à partir de l'accéléromètre tridimensionnel et des données filtrées recueillies à partir du magnétomètre tridimensionnel (120) pour déterminer la valeur de ladite au moins une caractéristique du champ magnétique terrestre.

8. Procédé selon la revendication 6, dans lequel l'utilisation des données recueillies à partir de l'accéléromètre tridimensionnel (130) avec les données recueillies à partir du magnétomètre tridimensionnel (120) pour déterminer la valeur de ladite au moins une caractéristique du champ magnétique terrestre comprend :

générer une valeur instantanée de ladite au moins une caractéristique du champ magnétique terrestre en utilisant le processeur de poste mobile (152) sur la base des données recueillies à partir du magnétomètre tridimensionnel avec les données recueillies à partir de l'accéléromètre tridimensionnel (130) ; et
prendre la moyenne de la valeur instantanée pour produire la valeur de ladite au moins une caractéristique du champ magnétique terrestre.

9. Procédé selon la revendication 6, comprenant en outre :

détecter des perturbations d'accélération dans les données recueillies à partir de l'accéléromètre tridimensionnel (130) ;
détecter des perturbations magnétiques dans les données recueillies à partir du magnétomètre tridimensionnel (120) ; et
empêcher que les données recueillies à partir de l'accéléromètre tridimensionnel et les données recueillies à partir du magnétomètre tridimensionnel soient utilisées pour déterminer la valeur de ladite au moins une caractéristique du champ magnétique terrestre lorsqu'au moins les unes ou les autres des perturbations d'accélération détectées et des perturbations magnétiques détectées sont en dehors d'une certaine plage.

10. Procédé selon la revendication 1, dans lequel la détermination d'une longitude approximative du poste mobile (100) en utilisant le processeur de poste mobile (152) sur la base d'une différence de temps entre une zone de temps local et une zone de temps de référence comprend en outre :

mémoriser une longitude à partir de la zone de temps de référence ;
déterminer la différence de temps entre la zone de temps local et la zone de temps de référence ;
convertir la différence de temps en une différence de longitude ; et
utiliser la différence de longitude et la longitude provenant de la zone de temps de référence pour déterminer la longitude approximative du poste mobile.

11. Procédé selon la revendication 10, dans lequel la détermination de la différence de temps entre la zone de temps local et la zone de temps de référence comprend la détermination du nombre de zones de temps se trouvant entre la zone de temps local et la zone de temps de référence, ou
dans lequel la détermination de la différence de temps entre la zone de temps local et la zone de temps de référence comprend le calcul de la différence entre le temps au niveau de la zone de temps local et le temps au niveau de la zone de temps de référence.

12. Poste mobile (100) comprenant :

des moyens (120) pour mesurer au moins une caractéristique du champ magnétique terrestre ;
des moyens pour déterminer une latitude approximative du poste mobile (100) en utilisant ladite au moins une caractéristique mesurée du champ magnétique terrestre;
des moyens pour recevoir un signal sans fil à partir d'une station de base comprenant au moins l'un d'un signal de temps local ou d'un signal de code de région ou de pays ;
des moyens pour déterminer une longitude approximative du poste mobile, les moyens pour déterminer déterminant une longitude approximative du poste mobile en utilisant le processeur du poste mobile sur la base d'une différence de temps entre un temps local et un temps de référence, le temps de référence étant le temps au niveau d'un emplacement ayant une position connue et la zone de temps local étant obtenue à partir du signal de temps local, de code de région ou de pays, reçu dans le signal sans fil ;
des moyens pour utiliser la latitude approximative et la longitude approximative dans la recherche de satellites (102) dans un système de positionnement par satellites, SPS, qui sont visibles du poste mobile pendant la recherche et l'acquisition de signaux de satellites pour un relevé de position ; et
dans lequel ladite au moins une caractéristique du champ magnétique terrestre est sélectionnée parmi un angle d'inclinaison et une intensité verticale.

**13.** Poste mobile (100) selon la revendication 12, dans lequel les moyens pour mesurer au moins une caractéristique du champ magnétique terrestre comprennent un magnétomètre tridimensionnel (120) et un accéléromètre tridimensionnel (130) qui a une orientation connue par rapport au magnétomètre tridimensionnel, et un processeur qui reçoit des données à partir du magnétomètre tridimensionnel et de l'accéléromètre tridimensionnel et qui calcule une valeur pour ladite au moins une caractéristique du champ magnétique terrestre, et de préférence comprenant en outre des moyens pour éliminer par filtrage des effets perturbateurs de masses métalliques sur le magnétomètre tridimensionnel (120) et le mouvement de l'accéléromètre tridimensionnel (130).

**14.** Poste mobile (100) selon la revendication 12, comprenant en outre des moyens pour détecter des perturbations d'accélération ;
des moyens pour détecter des perturbations magnétiques ; et
des moyens pour empêcher que les données provenant de l'accéléromètre tridimensionnel et les données provenant du magnétomètre tridimensionnel soient utilisées pour calculer une valeur pour ladite au moins une caractéristique du champ magnétique terrestre lorsqu'au moins les unes ou les autres des perturbations d'accélération détectées et des perturbations magnétiques détectées sont en dehors d'une certaine plage.

**15.** Support lisible par un ordinateur comprenant du code de programme mémorisé sur lui, comprenant :

du code de programme pour réaliser les étapes de l'une quelconque des revendications 1 à 11.

Fig. 1

Fig. 2

## 2000
### Inclination (degrees down)

Fig. 3

International Geomagnetic Reference Field (IGRF)

## 2000
### Vertical Component (microTesla down)

Fig. 4

International Geomagnetic Reference Field (IGRF)

## 2000
### Declination (degrees east)

Fig. 5

International Geomagnetic Reference Field (IGRF)

## Fig. 6

2000
Horizontal Intensity (microTesla)

International Geomagnetic Reference Field (IGRF)

## Fig. 7

2000
Total Intensity (microTesla)

International Geomagnetic Reference Field (IGRF)

Fig. 8

```
┌─────────────────────────────────────────────────┐
│         Determining a value of a feature of the  │ ⌐202
│  Earth's magnetic field using magnetometer data  │
└─────────────────────────────────────────────────┘
                         │
                         ▼
┌─────────────────────────────────────────────────┐
│ Determining an approximate latitude of the mobile station │ ⌐204
│ using the value of the feature of the Earth's magnetic field │
└─────────────────────────────────────────────────┘
                         │
                         ▼
┌─────────────────────────────────────────────────┐
│       Determining an approximate longitude of the │ ⌐206
│            mobile station using the time difference │
│  between the local time zone and a reference time zone │
└─────────────────────────────────────────────────┘
                         │
                         ▼
┌─────────────────────────────────────────────────┐
│ Using the approximate latitude and approximate longitude │ ⌐208
│            to assist in searching for satellites │
└─────────────────────────────────────────────────┘
```

# Fig. 9

Fig. 10

Fig. 11

500 —

508

510

Reference
Time Zone

Time Zone to
Longitude

+ Longitude

502

+

Reference
Time

-

Local
Time

+

Time Difference to
Longitude
Difference

506

104

504

# Fig. 12

**EP 2 356 403 B1**

**REFERENCES CITED IN THE DESCRIPTION**

**Patent documents cited in the description**

- US 2004203915 A1
- US 20030004639 A1
- WO 2006044931 A1